# EUROPÄISCHE PATENTSCHRIFT

(11) **EP 0 907 996 B1**
(45) Veröffentlichungstag und Bekanntmachung des Hinweises auf die Patenterteilung: **02.01.2002**
(21) Anmeldenummer: 97931681.7
(22) Anmeldetag: 26.06.1997
(51) Int. Cl.: H02G 5/06

(54) **VERFAHREN ZUM INSTALLIEREN EINER GASISOLIERTEN ROHRLEITER-KABELANLAGE**
PROCESS FOR INSTALLING A CABLE SYSTEM INSULATED BY GAS
PROCEDE D'INSTALLATION D'UN SYSTEME DE CABLES A ISOLATION GAZEUSE

(30) Priorität: 27.06.1996 DE 19627381
(43) Veröffentlichungstag der Anmeldung: 14.04.1999
(73) Patentinhaber: SIEMENS AKTIENGESELLSCHAFT, 80333 München (DE)
(72) Erfinder: KOCH, Hermann, D-91466 Gerhardshofen (DE)
(86) Internationale Anmeldenummer: DE9701361
(87) Internationale Veröffentlichungsnummer: WO9800897

(56) Entgegenhaltungen:
- EP-A- 0 573 338
- FR-A- 2 716 751
- D.R.GREEN: "CEI installs first SF6 345kv bus" ELECTRICAL WORLD, Bd. 176, Nr. 11, 1.Dezember 1971, Seiten 40-41, XP002045286

## Beschreibung

Die Erfindung liegt auf dem Gebiet der Energieübertragung und ist bei der Installation von Kabelanlagen anzuwenden, deren stromführende Leiter innerhalb einer Kapselung mittels isolierender Abstandhalter angeordnet sind, wobei die Kapselung mit einem Isoliergas gefüllt ist. Derartige Kabelanlagen werden u.a. als gasisolierte Rohrleiter-Anlagen oder SF₆-isolierte Rohrgaskabel bezeichnet. Die Erfindung befaßt sich mit der Aufrechterhaltung einer reinen Gasatmosphäre im Innern der Kapselung während der Errichtung der Anlage.

Die Installation von gasisolierten Rohrleiteranlagen ist bisher in der Weise praktiziert worden, daß im Werk vorgefertigte, staub- und gasdicht verschlossene kurze, etwa 10 bis 20 m lange Längsabschnitte der Kapselung, die einen oder drei Energieleiter enthalten, an den Verlegeort transportiert und dort miteinander verbunden werden. Während des Zusammenbaus der einzelnen Längsabschnitte wird durch nicht näher bezeichnete Maßnahmen dafür Sorge getragen, daß Staub oder sonstige Verunreinigungen nicht in das Innere der Kapselungsrohre eindringen können (Prospekt "Hochleistungsübertragung mit SF₆ - Rohrleitern" der Siemens AG, 1975, Seiten 1 bis 20; Brown Boveri Mitt. 47-4, Seite 167/169). - Eine andere bekannte Installationstechnik sieht vor, die vorgefertigten kurzen Längsabschnitte oberhalb der Kabeltrasse miteinander zu verbinden und den sich ergebenden Strang langsam in die Trasse abzusenken, wobei der Strang auf Biegung beansprucht wird. Nach der Installation eines Unterabschnittes der Anlage wird der an beiden Enden mit Sperrmuffen verschlossene Unterabschnitt evakuiert und mit einem Isoliergas wie SF₆ gefüllt. Dieses Gas wird dann im Umlauf gereinigt und getrocknet, bis der Feuchtigkeitsgehalt weniger als 30 ppm beträgt (Paper 71 TP 193-PWR beim IEEE Winter Power Meeting, 31.01. bis 5. Febr. 1971 in New York "Development of a Compressed-Gas-Insulated Transmission Line", Seiten 2631 bis 2634). - Bei einer ähnlichen bekannten Verlegetechnik für dreiphasige Systeme werden 10 m-Abschnitte mittels einer fahrbaren Werkstatt verbunden und Schritt für Schritt mittels eines rüsselartigen Führungsteiles in den Graben gelegt, wobei die Elastizität der Kapselung eine Neigung von 10 %, d.h. die Überwindung einer Höhendifferenz von 2,5 m auf einer Länge von 25 m ermöglicht (GEC Alsthom Technical Review Nr. 13, 1994, Seiten 17 bis 24).

Ausgehend von einem Verfahren zur Errichtung einer gasisolierten Rohrleiter-Kabelanlage mit den Merkmalen des Oberbegriffes des Patentanspruches 1 liegt der Erfindung die Aufgabe zugrunde, die Handhabung der vorgefertigten Einzellängen so auszugestalten, daß während des Installationsvorganges die Reinheit der Gasatmosphäre innerhalb der Kapselung der Einzellängen erhalten bleibt.

Zur Lösung dieser Aufgabe ist gemäß der Erfindung vorgesehen, daß bei der Verbindung der Einzellängen eine ständige Strömung trockener Luft von dem einen Ende der ersten Einzellänge zum Ende der jeweils letzten angesetzten Einzellänge hin aufrechterhalten wird, wobei jeweils der zu verbindende Bereich zweier Einzellängen von einem abgeschlossenen Montageraum umgeben wird, aus dem während der Herstellung der Verbindung die aus den bereits verbundenen Einzellängen ausströmende getrocknete Luft abgesaugt wird.

Die gemäß der Erfindung vorgesehene Maßnahme der Durchströmung der Anlagenteile während ihrer Montage ermöglicht eine kontrollierte Reinhaltung der Atmosphäre innerhalb der jeweils zu verbindenden Einzellängen, dabei insbesondere auch im jeweiligen Verbindungsbereich. Dadurch wird sichergestellt, daß die innerhalb der Kapselungen angeordneten isolierenden Abstandhalter, deren Material an sich Feuchtigkeit aufnehmen kann, auch während der Montage in einem "trockenen" Zustand bleiben, so daß sich eine nachträgliche Behandlung des Gasraumes der gekapselten Kabelanlage zur Reduzierung des Feuchtigkeitsgehaltes und zur Reinigung der Gasatmosphäre erübrigt.

Die gemäß der Erfindung vorgesehene Maßnahme der Durchströmung mit getrockneter Luft kann sowohl dann angewendet werden, wenn die Einzellängen der Kapselung direkt in der Anlagentrasse miteinander verbunden werden, als auch dann, wenn Einzellängen oberhalb oder neben der Trasse miteinander verbunden und dann in die Trasse, z.B. einen Graben, abgelassen werden. Mit Vorteil wird die Verbindung der Einzellängen und das Ablassen in den Graben in der Weise durchgeführt, daß zunächst mehrere Einzellängen außerhalb des Grabens zu einem Unterabschnitt mit einer Länge von etwa 100 m verbunden und die Enden des Unterabschnittes verschlossen werden und danach dieser Unterabschnitt als Ganzes in den Graben gelegt wird; anschließend wird ein zweiter Unterabschnitt montiert, in den Graben gelegt und mit dem ersten Unterabschnitt verbunden und nachfolgend werden weitere Unterabschnitte montiert, in den Graben gelegt und mit dem jeweils vorhergehenden Unterabschnitt verbunden. Hierbei ist weiterhin wesentlich, daß beim Verbinden zweier Unterabschnitte von wenigstens einem der äußeren Enden der beiden Unterabschnitte her ein trockener Luftstrom zur Verbindungsstelle hin aufrecht erhalten wird, wobei der Verbindungsbereich der beiden Unterabschnitte ebenfalls von einem abgeschlossenen Montageraum umgeben wird, aus dem die aus dem einen oder beiden Unterabschnitten ausströmende Luft abgesaugt wird.

Bei dieser Variante ist gewährleistet, daß auch im jeweiligen Verbindungsbereich der Unterabschnitte die umgebende Atmosphäre kontrolliert reingehalten wird.

Bei der im Rahmen der Erfindung vorgesehenen Verbindung von Einzellängen zu einem Unterabschnitt können Einzellängen gehandhabt werden, die bereits den energieführenden Innenleiter oder mehrere energieführende Innenleiter enthalten; die Einzellängen der Kapselung können aber auch zunächst leer sein. Sofern zunächst nur mehrere Einzellängen der äußeren Kapselungsrohre miteinander zu einem Unterabschnitt verbunden werden, ist auch bei diesen Montageschritten der trockene Luftstrom aufrechtzuerhalten. Nach Fertigstellung eines Unterabschnittes werden anschließend innerhalb des Montageraumes die Einzellängen der Innenleiter unter Aufrechterhaltung des trockenen Luftstromes nacheinander in den Unterabschnitt der Kapselungsrohre eingeschoben und miteinander verbunden.

Bei Ausübung des erfindungsgemäßen Verfahrens kann die Strömung der trockenen Luft während der Verbindung der äußeren Kapselungsrohre innerhalb eines Unterabschnittes oder bei der Verbindung der beiden angrenzenden Kapselungsrohre zweier Unterabschnitte aufrechterhalten werden, wenn es der Verbindungsvorgang zuläßt. Insbesondere beim Verschweißen zweier Kapselungsrohre kann es jedoch zweckmäßig sein, die Strömung der trockenen Luft vorübergehend zu unterbrechen. Da sich die Verbindungsstelle in einem gegenüber dem Außenraum abgedichteten Montageraum befindet, ist während der Zeit der Unterbrechung eine Verunreinigung der Gasatmosphäre innerhalb der Kapselung nicht zu befürchten.

Die einzelnen Montageschritte eines gemäß der Erfindung ausgebildeten Verfahrens zum Installieren einer Kabelanlage werden nachfolgend anhand von schematischen Darstellungen gemäß den Figuren 1 bis 5 näher erläutert. Dabei zeigt
- Figur 1: in schematischer Darstellung das Aneinanderfügen mehrerer Einzellängen,
- Figur 2: das Aneinanderfügen mehrerer vorgefertigter Teillängen,
- Figur 3: das Einbringen eines Unterabschnittes in einer als Graben ausgebildeten Trasse,
- Figur 4: das Verbinden zweier Unterabschnitte in einer Trasse und
- Figur 5: die Verbindung von Einzellängen der äußeren Kapselung und das nachträgliche Einbringen des Innenleiters.

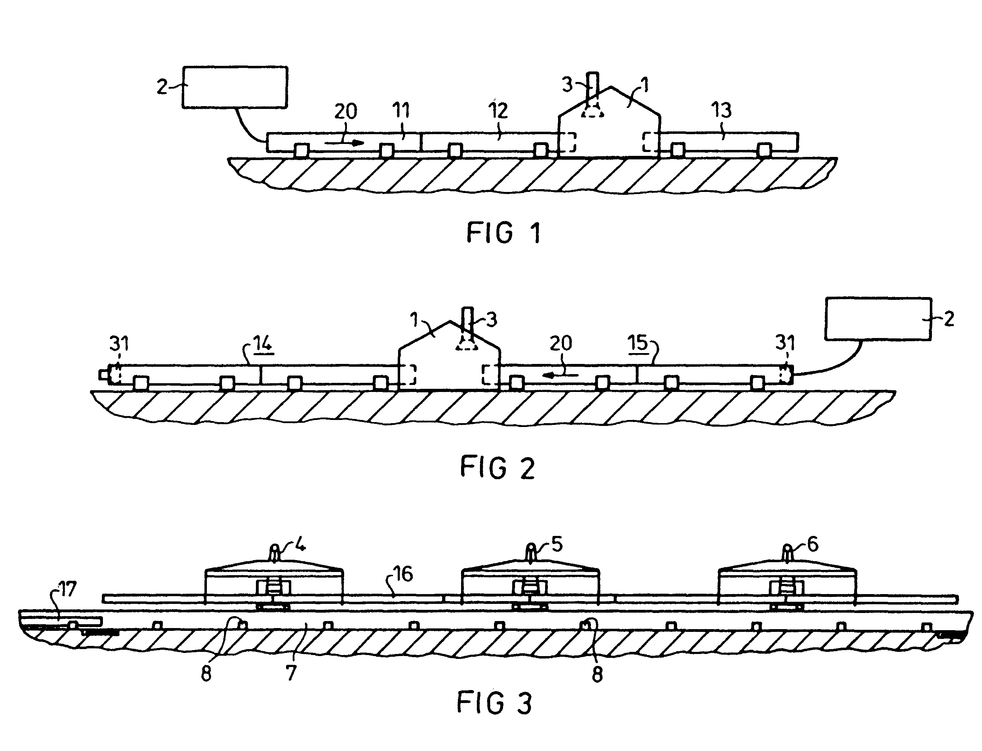

Gemäß Figur 1 sind zwei aus Außen- und Innenleiter bestehende Einzellängen 11 und 12 einer Rohrleiter-Kabelanlage bereits miteinander verbunden; an die so gebildete Teillänge soll als nächstes eine weitere Einzellänge 13 angefügt werden. Hierzu ist ein mobiler Montageraum 1, beispielsweise ein Montagezelt vorgesehen, in das die zu verbindenden Enden abgedichtet eingeführt werden. Um während der Montage den Zutritt von Verunreinigungen und Feuchtigkeit in das Innere der Einzellängen zu verhindern, sind diese zunächst an ihren Enden jeweils mit einer Abdeckung versehen, wobei die jeweils innerhalb des mobilen Montageraumes 1 befindlichen Abdeckungen für die Montagezwecke abgenommen werden. Am freien Ende der bereits montierten Einzellänge 11 ist über eine mit einem Ventil versehene Kappe eine Einrichtung 2 zur Trocknung und Kompression von Luft angeschlossen. Nach Öffnung des nicht näher bezeichneten Ventils strömt in die Teillänge 11, 12 getrocknete Luft in Richtung des Pfeiles 20 durch die Teillänge hindurch in den mobilen Montageraum 1 und erzeugt dort einen gewissen Überdruck. Der Montageraum 1 wird über eine Ventilation 3 entlüftet. - Nach der Verbindung der Teillänge 13 mit der Teillänge 12 wird der Montageraum 1 an das freie Ende der Teillänge 13 gesetzt und dort in gleicher Weise die nächste Teillänge angeschlossen. Dieser Montagevorgang kann beispielsweise in der jeweils vorgesehenen Trasse erfolgen, d.h. die Einzellängen 11, 12 und 13 werden zum Zwecke der Montage gleich in ihrer endgültigen Lage positioniert. Man kann aber auch so vorgehen, daß man oberhalb der Trasse Teillänge an Teillänge anschließt und den in seiner Länge ständig wachsenden Abschnittes der Kabelanlage Schritt für Schritt in die Trasse abläßt.

Die Montageschritte gemäß Figur 1 können auch außerhalb der Trasse so ausgeführt werden, daß mehrere Einzellängen zu einem Unterabschnitt von beispielsweise etwa 100 m zusammengefügt und dieser Unterabschnitt zunächst neben der Trasse belassen wird.

Gemäß Figur 2 kann ein solcher Unterabschnitt auch dadurch hergestellt werden, daß mehrere aus Einzellängen aufgebaute Teillängen 14, 15, die zuvor in einer ortsfesten Montagestation zu einer an den Enden mit Kappen 31 verschlossenen Teillänge verbunden worden sind, neben der Trasse zu einem Unterabschnitt zusammengefügt werden. Dabei ist jeweils auch die Verwendung eines mobilen Montageraumes 1 erforderlich, in den von einem Ende einer der beiden Teillängen getrocknete Luft mittels einer Einrichtung 2 zur Trocknung und Kompression von Luft eingespeist wird.

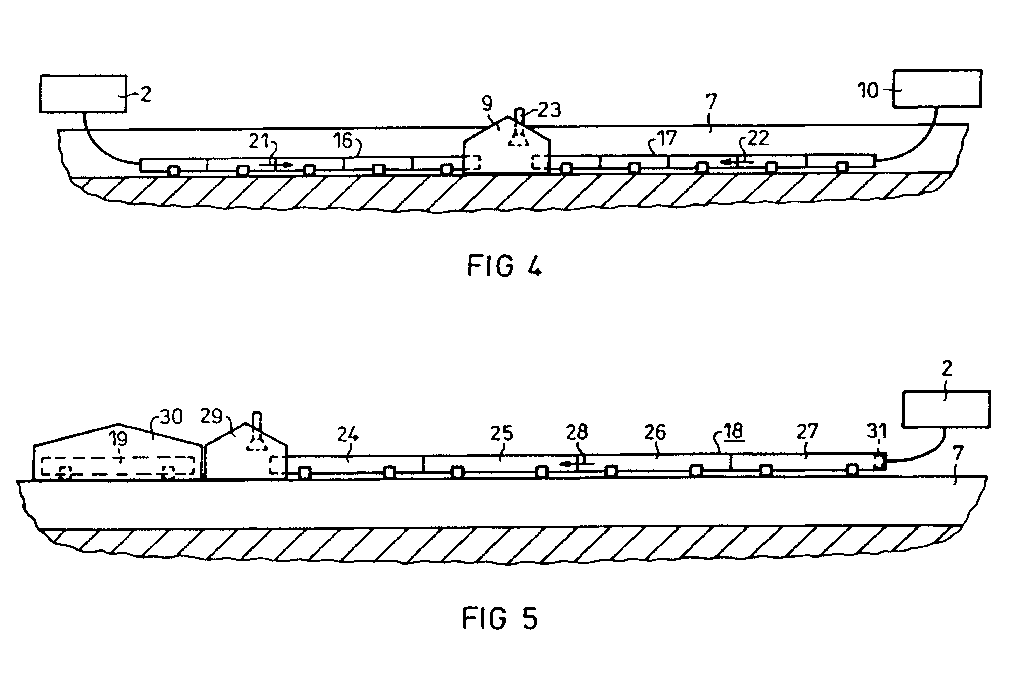

Gemäß Figur 3 kann ein neben der Trasse gefertigter Unterabschnitt 16 mit einer Länge von etwa 100 m mit Hilfe mehrerer synchron gesteuerter, fahrbarer Hebezeuge 4, 5, 6 auf die in einem Graben 7 angeordneten Auflagepunkte 8 aufgelegt werden, um mit einem bereits im Graben 7 liegenden Unterabschnitt 17 verbunden zu werden. Die Verbindung zweier solcher Unterabschnitte erfolgt im Prinzip in gleicher Weise wie die Verbindungen von Einzellängen. Gemäß Figur 4 ist hierzu ein weiterer mobiler Montageraum 9 vorgesehen, der in der Trasse angeordnet ist und der mit einer Ventilation 23 versehen ist und in den die beiden Enden der Unterabschnitte 16 und 17 dicht eingeführt sind. An die beiden freien Enden der Unterabschnitte 16 und 17 ist jeweils eine Einrichtung 2 bzw. 10 zur Trocknung und Kompression von Luft und zur Einspeisung dieser Luft in die beiden Unterabschnitte angeordnet. Auf diese Weise werden die beiden Unterabschnitte während der Montage von getrockneter Luft 21,22 durchströmt, die an den im Montageraum befindlichen Enden der Unterabschnitte das Eindiffundieren von Verunreinigungen und Feuchtigkeit verhindert.

Gemäß Figur 5 sind mehrere Einzellängen 24,25,26,27 der lediglich äußeren Kapselung einer Kabelanlage in gleicher Weise wie bei dem Ausführungsbeispiel gemäß Figur 1 zu einer Teillänge 18 verbunden, wobei für die Herstellung dieser Teillänge ein mobiler Montageraum 29 und eine Einrichtung 2 zum Trocknen, Komprimieren und Einspeisen von Luft verwendet wurde. Nach Fertigstellung der Teillänge 18 werden in die Kapselung Teillängen des Innenleiters 19 eingeschoben; diese sind in einem weiteren abgeschlossenen Montageraum 30 hierfür bereitgestellt und werden durch eine dichte Verbindung zwischen den Montageräumen 29 und 30 hindurch in die Teillänge 18 eingefahren und dort fixiert. Dies erfolgt ebenfalls unter Aufrechterhaltung einer trockenen Luftströmung 28 durch die Teillänge 18 hindurch. - Nach entsprechender Fertigstellung eines Unterabschnittes wird dieser dann gemäß Figur 3 in die Trasse gehoben.

## Patentansprüche

1. Verfahren zum Errichten einer gekapselten, gasisolierten Rohrleiter- Kabelanlage unter Aufrechterhaltung einer reinen Gasatmosphäre im Innern der Kapselung während deren Verlegung,
bei dem staub- und gasdicht abgeschlossene Einzellängen (11,12,13) der Kapselung - mit oder ohne eingesetzte Energieleiter - Schritt für Schritt miteinander zu einem Anlagenabschnitt (16) verbunden werden,
**dadurch gekennzeichnet,**
**daß** bei der Verbindung der Einzellängen (11,12,13) eine ständige Strömung (20) trockener Luft von dem einen Ende der ersten Einzellänge (11) zum Ende der jeweils letzten angesetzten Einzellänge (12) hin aufrechterhalten wird,
- wobei jeweils der zu verbindende Bereich zweier Einzellängen (12,13) von einem abgeschlossenen Montageraum (1) umgeben wird, aus dem während der Herstellung der Verbindung die aus den bereits verbundenen Einzellängen ausströmende getrocknete Luft abgesaugt (3) wird.

2. Verfahren nach Anspruch 1, bei dem miteinander verbundene Einzellängen in einen Graben abgelegt werden,
**dadurch gekennzeichnet,**
**daß** zunächst mehrere Einzellängen außerhalb des Grabens (7) zu einem Unterabschnitt (17) mit einer Länge von etwa 100 m verbunden und die Enden des Unterabschnittes verschlossen werden und danach dieser Unterabschnitt (17) als Ganzes in den Graben (7) gelegt wird,
**daß** anschließend ein zweiter Unterabschnitt (16) montiert, in den Graben (7) gelegt und mit dem ersten Unterabschnitt (17) verbunden wird und nachfolgend weitere Unterabschnitte montiert, in den Graben gelegt und mit dem jeweils vorhergehenden Unterabschnitt verbunden werden
und **daß** beim Verbinden zweier Unterabschnitte (16,17) von wenigstens einem der äußeren Enden der beiden Unterabschnitte her ein trockener Luftstrom (21,22) zur Verbindungsstelle hin aufrecht erhalten wird,
- wobei der Verbindungsbereich der beiden Unterabschnitte von einem abgeschlossenen Montageraum (9) umgeben wird, aus dem die aus den beiden Unterabschnitten ausströmende Luft abgesaugt (23) wird.

3. Verfahren nach Anspruch 2,
**dadurch gekennzeichnet,**
**daß** bei der Verbindung der Einzellängen zu einem Unterabschnitt zunächst nur die Einzellängen (24,25,26,27) der äußeren Kapselungsrohre miteinander verbunden werden und hierbei der trockene Luftstrom (28) aufrechterhalten wird
und **daß** anschließend innerhalb des Montageraumes (29) die Innenleiter-Einzellängen (19) unter Aufrechterhaltung des trokkenen Luftstromes nacheinander in den Unterabschnitt der Kapselungsrohre eingeschoben und miteinander verbunden werden.

4. Verfahren nach einem der Ansprüche 1 bis 3,
**dadurch gekennzeichnet,**
**daß** während der Verbindung der äußeren Kapselungsrohre durch Verschweißen die Strömung (20,21,22,28) der trockenen Luft unterbrochen wird.

## Claims

1. Process for erecting an encapsulated, gas-insulated tubular conductor cable system whilst maintaining a pure gas atmosphere inside the encapsulation during laying, in which single lengths (11, 12, 13) of the encapsulation, sealed so that they are dust- and gastight, - with or without the power conductor inserted - are joined together step by step so that they form a section of the system (16)
**characterised in that**
when joining the single lengths (11, 12, 13), a constant flow (20) of dry air is maintained from the one end of the first single length (11) to the end of the respective last single length (12) placed in position,
- the region of two single lengths (12, 13) to be joined being surrounded by a sealed assembly enclosure (1) from which the dried air flowing out of the single lengths already joined together is extracted (3) during the manufacture of the joint.

2. Process according to claim 1, in which the single lengths joined together are laid in a trench **characterised in that**
first of all several single lengths are joined together outside the trench (7) to form a subsection (17) with a length of approximately 100 m and that the ends of the subsection are sealed and that subsequently this subsection (17) as a whole is placed in the trench (7), that subsequently a second subsection (16) is assembled, placed in the trench (7) and joined to the first subsection (17) and then further subsections are assembled, laid in the trench and joined to the respective preceding subsection and that when joining two subsections (16, 17) a flow of dry air (21, 22) is maintained to the location of the joint from at least one of the outer ends of the two subsections,
- the joint region of the two subsections being surrounded by a sealed assembly enclosure (9) from which the air flowing out of the two subsections is extracted (23).

3. Process according to claim 2
**characterised in that**
when joining the single lengths to form a subsection, first of all only the single lengths (24, 25, 26, 27) of the outer encapsulating tube are joined together and during this process the flow of dry air (28) is maintained and that then the single lengths of the internal conductor (19) within the assembly enclosure (29) are inserted one after the other into the subsection of the encapsulation tube, whilst maintaining the flow of dry air, and joined together.

4. Process according to one of the claims 1 to 3
**characterised in that**
the flow of dry air (20, 21, 22, 28) is discontinued during welding whilst joining the outer encapsulating tube.

## Revendications

1. Procédé d'installation d'un système de câbles à conducteurs tubulaires encapsulé et isolé au gaz moyennant le maintien d'une atmosphère gazeuse pure à l'intérieur de l'encapsulage pendant la pose,
selon lequel des longueurs individuelles (11, 12, 13), fermées de manière étanche à la poussière et au gaz, de l'encapsulage - avec ou sans conducteur d'énergie - sont assemblées entre elles progressivement en un tronçon de système (16),
**caractérisé en ce**
**que** lors de l'assemblage des longueurs individuelles (11, 12, 13), on maintient un flux constant (20) d'air sec, depuis une extrémité de la première longueur individuelle (11) vers l'extrémité de la dernière longueur individuelle (12) rapportée,
- la zone à assembler de deux longueurs individuelles (12, 13) étant entourée par un espace de montage fermé (1) dont on aspire (3), pendant la réalisation de l'assemblage, l'air séché sortant des longueurs individuelles déjà assemblées.

2. Procédé selon la revendication 1, selon lequel des longueurs individuelles assemblées entre elles sont déposées dans une tranchée,
**caractérisé en ce**
**que** plusieurs longueurs individuelles sont tout d'abord assemblées à l'extérieur de la tranchée (7) en un sous-tronçon (17) d'une longueur d'environ 100 m, les extrémités du sous-tronçon sont fermées et ce sous-tronçon (17) est ensuite placé en totalité dans la tranchée (7),
**qu'**un second sous-tronçon (16) est ensuite monté, placé dans la tranchée (7) et assemblé avec le premier sous-tronçon (17) puis d'autres sous-tronçons sont montés, placés dans la tranchée et assemblés avec le sous-tronçon précédent
et **que** lors de l'assemblage de deux sous-tronçons (16, 17), on maintient, depuis au moins une des extrémités extérieures des deux sous-tronçons, un flux d'air sec (21, 22) en direction du point d'assemblage,
- la zone d'assemblage des deux sous-tronçons étant entourée par un espace de montage fermé (9) dont on aspire (23) l'air sortant des deux sous-tronçons.

3. Procédé selon la revendication 2,
**caractérisé en ce**
**que** lors de l'assemblage des longueurs individuelles en un sous-tronçon, on assemble dans un premier temps entre elles uniquement les longueurs individuelles (24, 25, 26, 27) des tubes d'encapsulage extérieurs et on maintient ce faisant le flux d'air sec (28)
et **qu'**ensuite, on procède, à l'intérieur de l'espace de montage (29), à l'introduction successive des longueurs individuelles de conducteurs intérieurs (19) dans le sous-tronçon des tubes d'encapsulage en maintenant le flux d'air sec et on assemble entre elles lesdites longueurs individuelles.

4. Procédé selon l'une des revendications 1 à 3,
**caractérisé en ce**
**que** pendant l'assemblage des tubes d'encapsulage extérieurs par soudage, on interrompt le flux d'air sec (20, 21, 22, 28).
